Europäisches Patentamt

European Patent Office

Office européen des brevets

(11) Publication number : **0 420 621 B1**

(12) **EUROPEAN PATENT SPECIFICATION**

(45) Date of publication of patent specification :
28.12.94 Bulletin 94/52

(51) Int. Cl.⁵ : **H04N 9/73**

(21) Application number : **90310552.6**

(22) Date of filing : **27.09.90**

(54) **Method and apparatus for effecting white balance control in an image pickup apparatus.**

(30) Priority : **29.09.89 JP 255507/89**

(43) Date of publication of application :
**03.04.91 Bulletin 91/14**

(45) Publication of the grant of the patent :
**28.12.94 Bulletin 94/52**

(84) Designated Contracting States :
**DE FR GB**

(56) References cited :
**EP-A- 0 207 543**
**US-A- 4 682 210**
**US-A- 4 689 686**
**US-A- 4 811 086**
**US-A- 4 879 591**
**US-A- 4 918 519**
**PATENT ABSTRACTS OF JAPAN, vol. 13, no. 548 (E-856), 7th December 1989; & JP-A-01 227 581 (FUJI PHOTO FILM CO.) 11-09-1989 (Cat.**
**PATENT ABSTRACTS OF JAPAN, vol. 12, no. 452 (E-687), 28th November 1988; & JP-A-63 179 666 (SANYO ELECTRIC CO.) 23-07-1988**

(73) Proprietor : **CANON KABUSHIKI KAISHA**
**30-2, 3-chome, Shimomaruko,**
**Ohta-ku**
**Tokyo (JP)**

(72) Inventor : **Yamazaki, Yasuyuki, c/o Canon Kabushiki Kaisha**
**3-30-2, Shimomaruko,**
**Ohta-ku**
**Tokyo (JP)**
Inventor : **Yamagata, Shigeo, c/o Canon Kabushiki Kaisha**
**3-30-2, Shimomaruko,**
**Ohta-ku**
**Tokyo (JP)**
Inventor : **Takayama, Tsutomu, c/o Canon Kabushiki Kaisha**
**3-30-2, Shimomaruko,**
**Ohta-ku**
**Tokyo (JP)**
Inventor : **Suzuki, Masao, c/o Canon Kabushiki Kaisha**
**3-30-2, Shimomaruko,**
**Ohta-ku**
**Tokyo (JP)**

(74) Representative : **Beresford, Keith Denis Lewis et al**
**BERESFORD & Co.**
**2-5 Warwick Court**
**High Holborn**
**London WC1R 5DJ (GB)**

## Description

## BACKGROUND OF THE INVENTION

### Field of the Invention

This invention relates to method and apparatus for effecting improved white balance control in an image pickup apparatus such as an electronic still camera.

### Description of the Prior Art

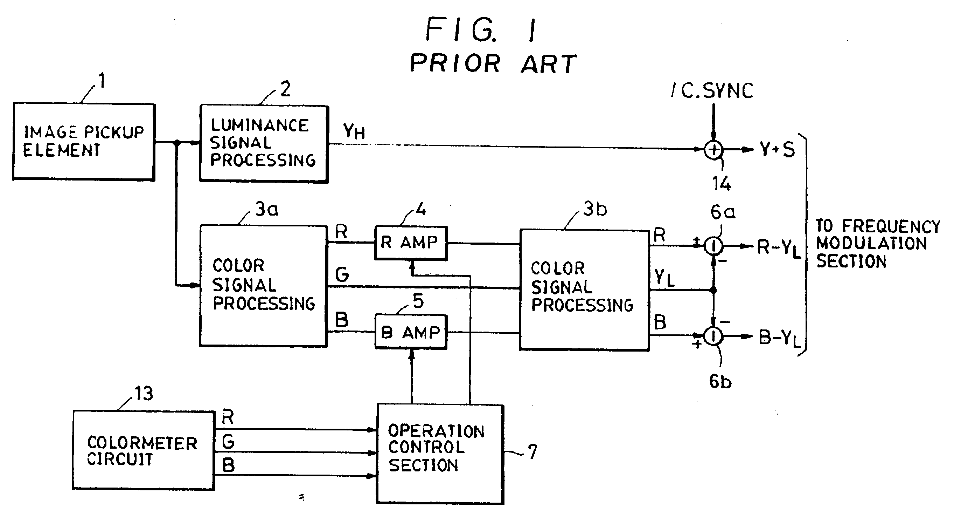

Conventional electronic cameras have a construction such as that shown in Fig. 1. Referring to Fig. 1, an image pickup element 1 converts an optical image into an electrical signal, and a luminance signal processing circuit 2 processes the signal output from the image pickup element 1 to form a luminance signal. Color signal processing circuits 3a and 3b form color signals R, B, and $Y_L$, and variable gain amplifiers 4 and 5 effect white balance control of the signals R and B. Subtraction circuits 6a and 6b form color-difference signals R - $Y_L$, B - $Y_L$. A colormeter circuit 13 separates color components (three colors, red, blue and green) from the light source light and converts these components into electrical signals. An operation control section 7 obtains the color temperature of the light source light from outputs R', G' and B' from the colormeter circuit 13, calculates a control voltage for suitable white balancing, and controls the gains of the R amplifier 4 and the B amplifier 5.

However, this conventional electronic still camera requires an expensive colormeter circuit for discriminating the color of the light source light to enable white balance control and therefore has a high production cost.

Moreover, the colormeter circuit and the color filter of the image pickup element have different spectral characteristics and there is a need for adjusting them.

Reference is made to the applicants' patent specification US-A-4 689 686 which discloses an image pickup apparatus suitable for obtaining exposure information and focus information.

Reference is also made to US-A-4 918 519 (published on 17.04.1990 and corresponding to JP-A-63267091) which discloses a color sensing apparatus including an image sensor, a light source color detecting circuit, a flash light quantity detecting circuit, and a control circuit arranged to control color balance in dependence upon the flash light quantity and light source color.

It is an object of the present invention to solve these problems of the prior art.

It is another object of the present invention to provide a low-cost simple electronic still camera capable of effecting white balance control with improved accuracy.

It is still another object of the present invention to provide an image pickup apparatus capable of optimizing white balance control according to the presence/non-presence or the magnitude of flicker.

According to the invention there is provided an image pickup apparatus comprising: image pickup means for receiving light from an object and forming three primary color signals from the received light; and flicker detection means for detecting flicker of the received light; characterised by control means adapted for forming white balance control signals and for effecting white balance control of the color signals by selectively using at least one of (a) a white balance control signal based on the three primary color signals according to the output from said flicker detection means, and (b) a white balance control signal based on two of the three primary color signals according to an output from said flicker detection means.

Further according to the invention there is provided a method comprising the steps of: a) forming three primary color signals from light received from the object by means of an image pickup means, b) effecting a check for flicker by a flicker detection circuit, characterised by c) forming, in dependence upon flicker as detected by said flicker detection circuit, white balance control signals based on at least one of the following i) the three primary signals and ii) two of the three primary color signals, and d) using said white balance signals to control the white balance of the color signals.

By means of the invention, there is no need for any special photometry sensor element, and the construction of the camera can therefore be simplified.

White balance signals may be formed by using two of the three primary colors if the magnitude of flicker is small, or white balance signals may be formed by using the three primary colors if the magnitude of flicker is large. Occurrence of an unnatural color can be prevented even if a green lawn or the like is photographed with a non-flickering light source. In a case where the light source is flickering, the influence of green components in a flickering light from the light source can be eliminated, thus optimizing white balance control.

In the accompanying drawings:-
Fig. 1 is a block diagram of a conventional electronic still camera;
Fig. 2(a) is a block diagram of an electronic still camera which represents a first embodiment of the present invention;
Fig. 2(b) is a timing chart of the first embodiment;
Fig. 3 is a flow chart of the operation of the first embodiment;
Fig. 4 is a diagram of the photometry circuit of the first embodiment;
Fig. 5 is a diagram of characteristics of the photometry circuit;

Fig. 6 is a flow chart of details of an important part of the flow chart shown in Fig. 3; and

Fig. 7 is a block diagram of an electronic still camera which represents a second embodiment of the present invention.

## DESCRIPTION OF THE PREFERRED EMBODIMENTS

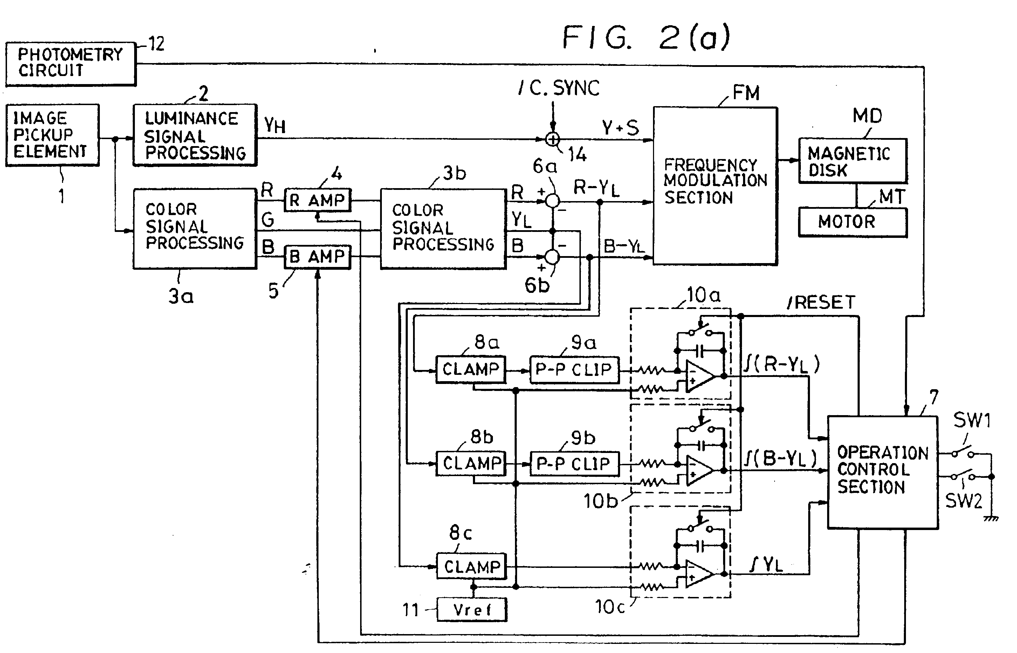

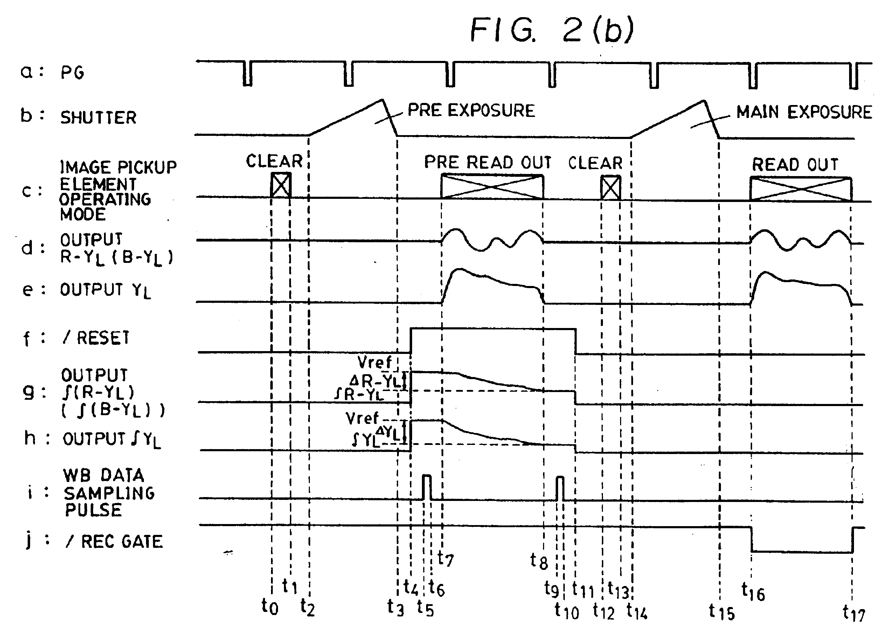

Fig. 2(a) shows a first embodiment of the present invention. Components indicated in Fig. 2 by the same reference characters as those of Fig. 1 have corresponding functions. Clamp circuits 8a, 8b and 8c serve to clamp supplied signals $R - Y_L$, $B - Y_L$, and $Y_L$ at a voltage determined by a reference voltage source 11. Clip circuits 9a and 9b serve to suppress signal components corresponding to high-chroma portions of the object which may affect the white balance. Integration circuits 10a, 10b, and 10c integrate signals output from the circuits 9a, 9b, and 8c.

A photometry circuit 12 serves to measure the brightness of the object. A frequency modulation section FM, a magnetic disk MD and a disk motor MT are also provided.

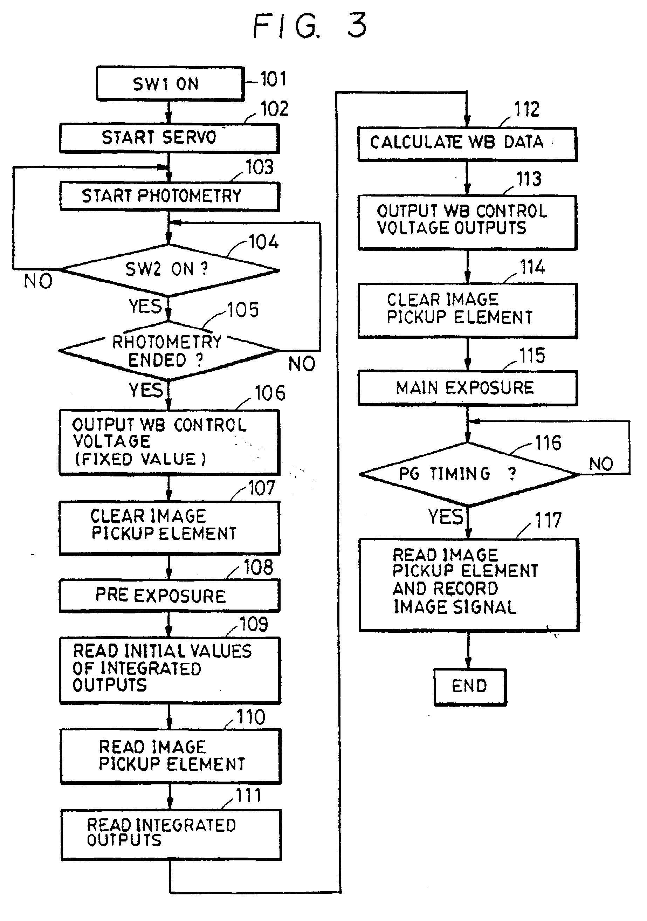

The operation of the present invention will be described below with reference to Figs. 2(a), 2(b) and 3. Fig. 2(b) and Fig. 3 respectively show a timing chart and a flow chart of the operation of the first embodiment of the present invention.

When a first-step switch SW1 of a two-step release button (not shown) is turned on (101), the magnetic disk motor MT starts servo-controlled operation (102) and the brightness of the object is measured by the photometry circuit 12 (103). The output from the photometry circuit is read by the operation control section 7 based on sampling using a timing asynchronous with the flicker of the illuminating fluorescent lamp, e.g., 23 times in 50 ms. This operation is repeated until a switch SW2 of the two-step release button is turned on. An average value $EV_{AV}$ and a maximum value $EV_{max}$ of the output from the photometry circuit are measured to obtain the magnitude of flicker $E_{VF} = EV_{max} - EV_{AV}$.

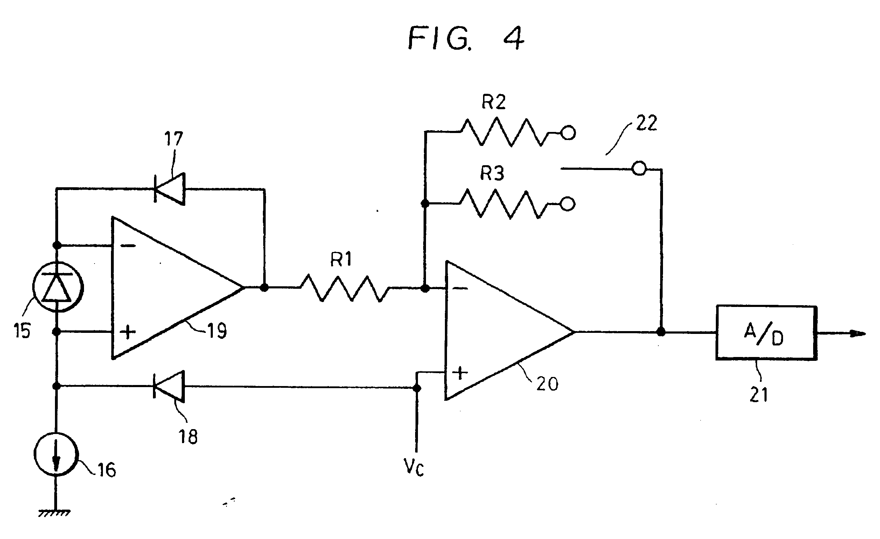

Fig. 4 shows the internal construction of the photometry circuit 12.

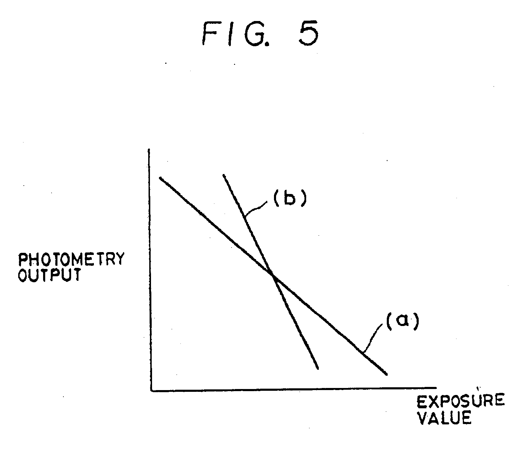

A switch 22 is ordinarily at the position for connection to a resistor R3. Light received by a photodiode 15 is converted into a voltage signal. This voltage signal is compressed by a logarithmic compressor consisting of a diode 17 and an amplifier 19, is amplified by an amplifier 20, and is converted into a digital signal by an A/D converter 21. This digital signal is input into the operation control section 7. Ordinarily, the relationship between the output from the photometry circuit and the brightness of the object (exposure value) is as represented by the line (a) in Fig. 5. This is because it is necessary to effect photometry with respect to a wide range of the exposure value EV. However, the range of photometry of a flickering light source may be restricted since light sources emitting flickering light are, ordinarily, fluorescent lamps, and since the range of brightness of fluorescent lamps is substantially narrow. Accordingly, the switch 22 is at the position for connection to the resistor R3 at the time of ordinary photometry, or it is operated to establish connection to another resistor R2. At this time, the relationship between the resistances of these resistors is R2 > R3. The relationship between the exposure value EV and the photometry output is thereby set as represented by the line (b) in Fig. 5. It is thereby possible to detect the magnitude of flicker with accuracy.

Referring again to Fig. 3, when the second-step switch SW2 of the two-step release button is turned on (104), the photometry is terminated (105) and a predetermined fixed value is output from the operation control section 7 as a reference white balance control voltage for first exposure (106). This fixed value is selected so that white balance can be achieved at a central color temperature in the color temperature range in which white balance control is effected. That is, the white balance point is centered to perform white balancing uniformly on both the low color temperature side and the high color temperature side. Thereafter, unnecessary charge accumulated in the image pickup element 1 is cleared in the period of time from $t_0$ to $t_1$ shown in Fig. 2(b) (107), and the shutter is opened at the time $t_2$ to effect a first exposure for a period of time (108). This exposure time and the aperture for this exposure are previously determined based on the above-mentioned photometry result $EV_{AV}$. The first exposure is terminated at $t_3$, and a pulse /RESET sent to the integration circuits 10a, 10b, and 10c is thereafter set to a high level at $t_4$ as indicated by the waveform f of Fig. 2(b) to start an integration operation. Initial values of integration outputs are read by sampling to the operation control section 7 in the period of time from $t_5$ to $t_6$ (109). At the time $t_7$, reading of signal charge accumulated in the image pickup element 1 during the first exposure is started (110). The read signal is converted into signals R, G, and B by a color signal processing circuit 3a as in the case of the conventional apparatus. The signals R and B are amplified by the white balance amplifiers 4 and 5 at gains determined by the control voltage previously set in step 106, and the color signal processing circuit 3b forms signals R, B, and $Y_L$ from these signals, and three signals $R - Y_L$, $B - Y_L$, and $Y_L$ are obtained by the subtraction circuits 6a and 6b. These signals are clamped at the voltage determined by the reference voltage source 11 by the clamp circuits 8a, 8b, and 8c. Signal components of the color difference signals $R - Y_L$ and $B - Y_L$ corresponding to high-chroma portions are clipped by the p-p clip circuits 9a and 9b to eliminate the influence of the high-chroma portions. The clip levels of the clip circuits 9a and 9b are determined within the ranges of the color signal levels which change according to the light source color in the color change according in which white balance control is effected. It is thereby possible to prevent over-correction of white balance at color temperatures out of the control range.

Outputs from the circuits 9a, 9b, and 8c are respectively integrated by the integration circuits 10a, 10b, and 10c to obtain integrated values $\int (R - Y_L)$, $\int (B - Y_L)$, and $\int Y_L$. The obtained integrated values are read to the operation control section 7 in the period of time from $t_9$ to $t_{10}$ (111). The differences Ex between the values read in step 109 and the values read in step 111 are used as integrated values of the respective signals.

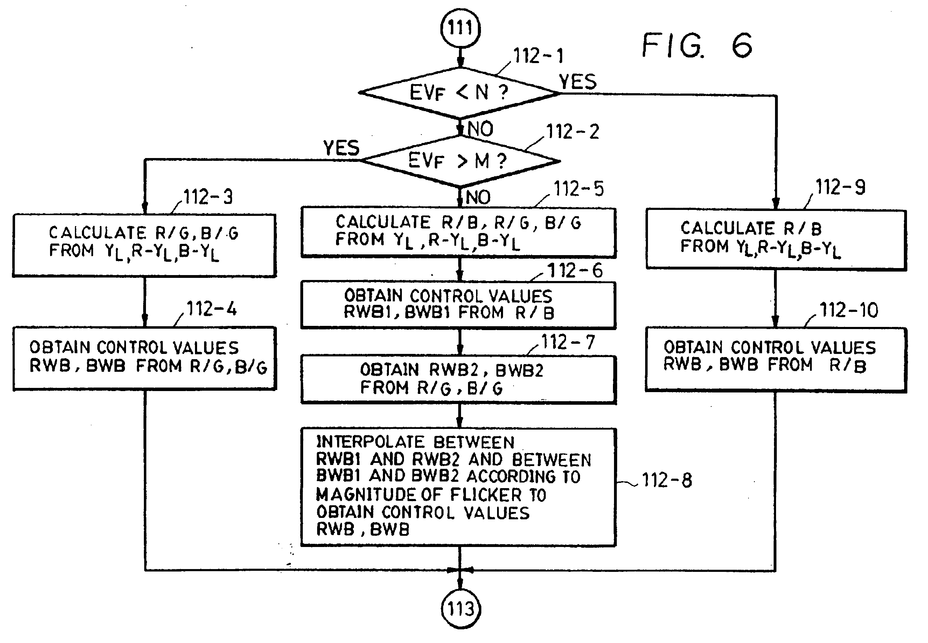

The operation control section 7 calculates white balance control values from the read integrated values (112). Fig. 6 shows a flow chart of this calculation.

The process of calculation of white balance control values will now be described below with reference to Fig. 6.

First, it is determined that the light source is not any fluorescent lamp if the magnitude of flicker $EV_F$ of the photometry value calculated as described above is smaller than a prescribed value N (112-1), and R/B is calculated from the integrated values of $Y_L$, $R - Y_L$, and $B - Y_L$ (112-9). Since the color temperature of the light source can be found from the ratio R/B, suitable white balance control values are obtained from the value of R/B and are set as RWB and BWB (112-10).

If the magnitude of flicker $EV_F$ is greater than a prescribed value M, it is determined that the light source is a fluorescent lamp (112-2), and values of R/G and B/G are calculated from the integrated values of $Y_L$, $R - Y_L$, and $B - Y_L$ (112-3). White balance control values for cancelling the green light from the fluorescent lamp are obtained from the values of R/G and B/G and are set as RWB and BWB (112-4).

If the magnitude of flicker $EV_F$ is in the range of $N \leqq EV_F \leqq M$, it is determined that the light source light is a mixture of fluorescent lamp light and external light. First, in this case, R/B is obtained as in the case of $EV_F < N$ and the corresponding white balance control values are obtained and are set as RWB1 and BWB1 (112-6). Further, R/G and B/G are obtained as in the case of $EV_F > M$, and white balance control values are obtained from the values of R/G and B/G and are set as RWB2 and BWB2 (112-7). The values obtained in these two ways are interpolated according to the magnitude of flicker by the following equations:

$$RWB = \frac{(RWB2 - RWB1) \times EV_F}{M} + RWB1$$

$$BWB = \frac{(BWB2 - BWB1) \times EV_F}{M} + BWB1$$

The control values RWB and BWB thereby obtained are output from the operation control section 7 (113).

The subsequent part of the operation flow is the same as the recording sequence for ordinary electronic still cameras. That is, unnecessary charge accumulated in the image pickup element is cleared in the period from $t_{12}$ to $t_{13}$ (114), the shutter is opened for the period of time $t_{14}$ to $t_{15}$ according to the above-mentioned Ex to effect a second exposure, thereby accumulating charge in the image pickup element (115). A phase generating signal PG is supplied from the disk motor at the time $t_{16}$ (116). The signal charge accumulated in the image pickup element is read out in synchronism with the signal PG, and a gate /REC (not shown) is opened to record the image signal on the magnetic disk MD (117).

As described above, the first exposure is effected before the second exposure for still image recording, the signals $Y_L$, $R - Y_L$, and $B - Y_L$ obtained by the first exposure are integrated, R, (G) and B are calculated from the integrated values, and white balance control voltages are obtained from R, G and B. It is thereby possible to automatically effect white balance adjustment without using any external colormeter element and, hence, to reduce the cost of the system.

White balance control is effected based on data comprising the signals R and B and/or data comprising the signals R, G, and B according to the presence/non-presence of flicker or the magnitude of flicker. It is therefore possible to eliminate the influence of flicker when the magnitude of flicker is large or the influence of a green lawn or the like when the magnitude of flicker is small.

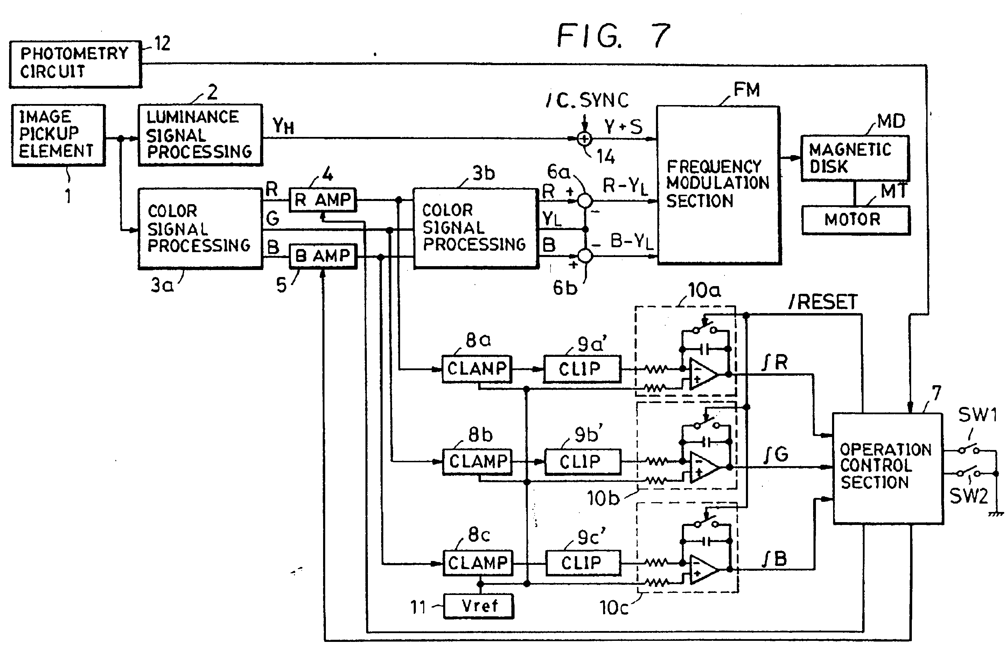

Fig. 7 shows blocks of an electronic still camera which represents a second embodiment of the present invention. Components indicated in Fig. 7 by the same reference characters as those of Fig. 2(a) have the corresponding functions.

In the first embodiment, the signals $Y_L$, $R - Y_L$, and $B - Y_L$ are used as information for calculating white balance control values. In this embodiment, however, the output G from the color signal processing circuit 3a and the signals R and B output from the R amplifier 4 and the B amplifier 5 are used. The control value sent to the R amplifier 4 and the B amplifier 5 at the time of first exposure is selected so that white balance can be achieved at a central color temperature in the color temperature range in which white balance control is effected, as in the case of the first embodiment.

The signals R, G, and B are respectively clamped by the clamp circuits 8a, 8b and 8c and are clipped by clip circuits 9a', 9b', and 9c' to eliminate the influence of the high-chroma portions. The clip levels of the clip circuits 9a', 9b' and 9c' are greater than maximums of the color signals which change according to the light source color in the color temperature range in which white balance control is effected. Outputs from the circuits 9a', 9b' and 9c' are respectively integrated by the integration circuits 10a, 10b, and 10c, and the integrated values are read to the operation control section 7. The operation control section 7 calculates white balance control values from the read integrated values to effect white balance control in the same manner as the first embodiment.

This embodiment has the same effects as the first embodiment.

In the above-described embodiments, the shutter is used for both the first exposure and the second exposure. However, the time interval between clearing and reading of the image pickup element may be changed under control to determine the substantial exposure time without using the shutter, if a slight amount of smear can be ignored. The first exposure and/or the second exposure may be controlled in this manner.

The length of time for each of the first exposure and the second exposure may be different from that of one television field period.

According to the arrangement in the first aspect of the present invention, exposure is effected for photometry before still image recording, and white balance control signals are formed from the color signals obtained by the first exposure, thereby enabling automatic white balance control without any special photometry element. As a result, the cost of the system is markedly reduced. In addition, since photometry is effected by using processed color signals, such a means can be used as a color filter of the image pickup element. The control process is therefore independent of changes in the object spectral characteristics and is free of troublesome adjustment. According to the arrangement in the second aspect of the present invention, the primary color signals from which white balance control signals are formed are selected according to the presence/non-presence of flicker, thus always optimizing white balance control.

The individual components shown in outline or designated by blocks in the Drawings are all well-known in the image pickup arts and their specific construction and operation are not critical to the operation for carrying out the invention.

## Claims

1. An image pickup apparatus comprising:
   image pickup means (1) for receiving light from an object and forming three primary color signals from the received light; and flicker detection means (7) for detecting flicker of the received light; characterised by
   control means (4, 5, 7, 8) adapted for forming white balance control signals and for effecting white balance control of the color signals by selectively using at least one of (a) a white balance control signal based on the three primary color signals according to the output from said flicker detection means, and (b) a white balance control signal based on two of the three primary color signals according to an output from said flicker detection means.

2. An image pickup apparatus as claimed in claim 1, characterised in that said two of the three primary colors comprise red and blue.

3. An image pickup apparatus as claimed in claim 1, characterised in that said control means effects white balance control by using the white balance control signal based on the three primary color signals if flicker is detected by said flicker detection means (7).

4. An electronic still camera including an image pickup apparatus as claimed in claim 1, 2 or 3, including still image recording means for recording the color image pickup signals as a still image; characterised in that
   said control means is further adapted for (a) effecting a first exposure with said image pickup means before still image recording is effected by said still image recording means, (b) forming said white balance control signals by using first color image pickup signals output from the image pickup means during the first exposure, (c) thereafter conducting a second exposure to obtain second color image pickup signals, and (d) effecting white balance control of the second color image pickup signals based on the white balance control signals.

5. An electronic still camera as claimed in claim 4, characterised in that said control means includes suppression means (9a, 9b; 9a', 9b', 9c') for suppressing high-chroma portions of the plurality of color image pickup signals for the formation of the white balance control signals.

6. An electronic still camera as claimed in claim 4 or 5, characterised in that said flicker detection means detects a flicker component of the received light, said control means effecting white balance control by using at least one of (a) information based on red and blue signals output from said image pickup means, and (b) information based on red, green and blue signals output from said image pickup means according to the amplitude of the detected flicker component.

7. An electronic still camera as claimed in claim 4, 5 or 6, characterised in that said control means includes means for controlling the second exposure in accordance with the first color image pickup signals.

8. An electronic still camera as claimed in any one of claims 4-7, characterised in that said control means controls a photographic exposure time condition.

9. A photographic method comprising the steps of:
   a) forming three primary color signals from light received from the object by means of an image pickup means,
   b) effecting a check for flicker by a flicker detection circuit, characterised by
   c) forming, in dependence upon flicker as detected by said flicker detection circuit, white balance control signals based on at least one of the following
   i) the three primary signals and
   ii) two of the three primary color signals, and
   d) using said white balance signals to control the white balance of the color signals.

10. A photographic method as claimed in claim 8, characterised by
   forming white balance information represented by said white balance control signals in response to trigger means;
   resetting the image pickup means subsequent to the forming step;
   exposing the image pickup means after the resetting step;
   reading signals from the image pickup means after the exposing step; and
   controlling the white balance of the signals obtained in the reading step on the basis of the white balance information obtained in the forming step.

11. A photographic method as claimed in claim 10, characterised in that photometry information is also formed in the forming step.

12. A photographic method as claimed in claim 11, characterised by a step of controlling the exposing step on the basis of the photometry information formed.

**Patentansprüche**

1. Bildaufnahmevorrichtung, mit:
   einer Bildaufnahmeeinrichtung (1) zum Empfangen von Licht von einem Gegenstand und zum Bilden von drei Primärfarbsignalen aus dem empfangenen Licht; und einer Flimmer-Erfassungseinrichtung (7) zum Erfassen von Flimmern des empfangenen Lichts;

**gekennzeichnet durch**
eine Steuereinrichtung (4, 5, 7, 8), die angepaßt ist zum Bilden von Weißabgleichssteuersignalen und zum Durchführen einer Weißabgleichssteuerung der Farbsignale unter ausgewählter Verwendung von zumindest einem aus (a) einem Weißabgleichssteuersignal, das auf den drei Primärfarbsignalen gemäß der Ausgabe der Flimmer-Erfassungseinrichtung beruht, und (b) einem Weißabgleichssteuersignal, das auf zwei der drei Primärfarbsignale gemäß einer Ausgabe der Flimmer-Erfassungseinrichtung beruht.

2. Bildaufnahmevorrichtung nach Anspruch 1,
   **dadurch gekennzeichnet, daß**
   die zwei der drei Primärfarben Rot und Blau umfassen.

3. Bildaufnahmevorrichtung nach Anspruch 1,
   **dadurch gekennzeichnet, daß**
   die Steuereinrichtung eine Weißabgleichssteuerung unter Verwendung des Weißabgleichssteuersignals, das auf den drei Primärfarbsignalen beruht, durchführt, falls durch die Flimmer-Erfassungseinrichtung (7) ein Flimmern erfaßt wird.

4. Elektronische Stehbildkamera mit einer Bildaufnahmevorrichtung nach den Ansprüchen 1, 2 oder 3, und einer Stehbildaufzeichnungseinrichtung zum Aufzeichnen der Farbbild-Aufnahmesignale als ein Stehbild,
   **dadurch gekennzeichnet, daß**
   die Steuereinrichtung ferner angepaßt ist zum (a) Durchführen einer ersten Belichtung mit der Bildaufnahmeeinrichtung, bevor eine Stehbildaufzeichnung durch die Stehbildaufzeichnungseinrichtung durchgeführt wird, zum (b) Bilden der Weißabgleichssteuersignale unter Verwendung erster Farbbildaufnahmesignale, die von der Bildaufnahmeeinrichtung während der ersten Belichtung ausgegeben werden, (c) danach zum Durchführen einer zweiten Belichtung, um zweite Farbbildaufnahmesignale zu erhalten, und zum (d) Durchführen einer Weißabgleichssteuerung mit den auf den Weißabgleichssteuersignalen beruhenden zweiten Farbbildaufnahmesignalen.

5. Elektronische Stehbildkamera nach Anspruch 4,
   **dadurch gekennzeichnet, daß**
   die Steuereinrichtung eine Unterdrückungseinrichtung (9a, 9b; 9a′, 9b′, 9c′) zum Unterdrücken von Bereichen hoher Farbintensität aus der Vielzahl von Farbbildaufnahmesignalen für die Bildung der Weißabgleichssteuersignale enthält.

6. Elektronische Stehbildkamera nach Anspruch 4 oder 5,
   **dadurch gekennzeichnet, daß**

die Flimmer-Erfassungseinrichtung eine Flimmerkomponente des empfangenen Lichts erfaßt, wobei die Steuereinrichtung eine Weißabgleichssteuerung unter Verwendung von zumindest einer aus (a) einer Information, die auf roten und blauen Signalausgaben von der Bildaufnahmeeinrichtung beruht, und (b) einer Information, die auf roten, grünen und blauen, von der Bildaufnahmeeinrichtung ausgegebenen Signalen beruht, gemäß der Amplitude der erfaßten Flimmerkomponente durchführt.

7. Elektronische Stehbildkamera nach Anspruch 4, 5 oder 6,
**dadurch gekennzeichnet, daß**
die Steuereinrichtung eine Einrichtung zum Steuern der zweiten Belichtung in Übereinstimmung mit den ersten Farbbildaufnahmesignalen enthält.

8. Elektronische Stehbildkamera nach einem der Ansprüche 4 bis 7,
**dadurch gekennzeichnet, daß**
die Steuereinrichtung eine photographische Belichtungszeitbedingung steuert.

9. Photographisches Verfahren, mit den Schritten:
a) Bilden von drei Primärfarbsrignalen aus von dem Gegenstand mittels einer Bildaufnahmeeinrichtung empfangenem Licht,
b) Durchführen einer Überprüfung bezüglich Flimmern mittels einer Flimmer-Erfassungsschaltung,
**gekennzeichnet durch**
c) Bilden von Weißabgleichssteuersignalen in Abhängigkeit von durch die Flimmer-Erfassungsschaltung erfaßtem Flimmern, die auf zumindest einem der folgenden Signale beruhen:
i) den drei Primärsignalen und
ii) zwei der drei Primärfarbsignale, und
d) Anwenden der Weißabgleichssignale zum Steuern des Weißabgleichs der Farbsignale.

10. Photographisches Verfahren nach Anspruch 9,
**gekennzeichnet durch**
Bilden einer Weißabgleichsinformation, die durch die Weißabgleichssteuersignale dargestellt wird, ansprechend auf eine Triggereinrichtung;
Rücksetzen der Bildaufnahmeeinrichtung nachfolgend dem Bildungsschritt;
Belichten der Bildaufnahmeeinrichtung nach dem Rücksetzschritt; Lesen von Signalen von der Bildaufnahmeeinrichtung nach dem Belichtungsschritt; und
Steuern des Weißabgleichs der beim Leseschritt erhaltenen Signale auf der Grundlage der beim Bildungsschritt erhaltenen Weißabgleichsinformation.

11. Photographisches Verfahren nach Anspruch 10,
**dadurch gekennzeichnet, daß**
beim Bildungsschritt ebenfalls eine Lichtmeßinformation gebildet wird.

12. Photographisches Verfahren nach Anspruch 11,
**gekennzeichnet durch**
einen Schritt zum Steuern des Belichtungsschritts auf der Grundlage der gebildeten Lichtmeßinformation.

**Revendications**

1. Appareil de prise d'images comprenant:
un moyen (1) de prise d'images pour recevoir de la lumière en provenance d'un objet et pour former trois signaux de couleurs primaires à partir de la lumière reçue; et un moyen (7) de détection de scintillement pour détecter un scintillement de la lumière reçue; caractérisé par
des moyens de commande (4, 5, 7, 8) aptes à former des signaux de commande de l'équilibre du blanc et à effectuer une commande de l'équilibre du blanc des signaux de couleurs en utilisant sélectivement au moins l'un parmi (a) un signal de commande d'équilibre du blanc basé sur les trois signaux de couleurs primaires en fonction de la sortie dudit moyen de détection de scintillement, et (b) un signal de commande de l'équilibre du blanc basé sur deux des trois signaux de couleurs primaires en fonction d'une sortie dudit moyen de détection de scintillement.

2. Appareil de prises d'images selon la revendication 1, caractérisé en ce que lesdites deux couleurs parmi les trois couleurs primaires comportent le rouge et le bleu.

3. Appareil de prises d'images selon la revendication 1, caractérisé en ce que ledit moyen de commande effectue une commande de l'équilibre du blanc en utilisant le signal de commande d'équilibre du blanc en fonction des trois signaux de couleurs primaires si un scintillement est détecté par ledit moyen (7) de détection de scintillement.

4. Caméra électronique à images fixes comportant un appareil de prise d'images selon la revendication 1, 2 ou 3, comportant un moyen d'enregistrement d'images fixes pour enregistrer les signaux de prise d'images en couleur sous la forme d'une image fixe; caractérisée en ce que ledit moyen de commande est en outre apte à (a) effectuer une première exposition avec ledit moyen de prise d'images avant que l'enregistrement d'images fixes soit effectué par ledit moyen d'enregistrement d'images fixes, (b) former lesdits signaux de commande d'équilibre du blanc en utilisant des premiers signaux de prise d'images en couleur délivrés par le moyen de prise d'images au cours de la première exposition, (c) effectuer ultérieurement une seconde exposition pour obtenir des seconds signaux de prise d'images en couleur, et (d) effectuer une commande de l'équilibre du blanc des seconds signaux de prise d'images en couleur en fonction des signaux de commande d'équilibre du blanc.

5. Caméra électronique à images fixes selon la revendication 4, caractérisée en ce que ledit moyen de commande comporte des moyens de suppression (9a, 9b; 9a′, 9b′, 9c′) pour supprimer des parties de chrominance élevée de la pluralité de signaux de prise d'images en couleur pour la formation des signaux de commande d'équilibre du blanc.

6. Caméra électronique à images fixes selon la revendication 4 ou 5, caractérisée en ce que ledit moyen de détection de scintillement détecte une composante de scintillement de la lumière reçue, ledit moyen de commande effectuant une commande de l'équilibre du blanc en utilisant au moins l'une parmi (a) une information en fonction des signaux rouge et bleu délivrés par ledit moyen de prise d'images, et (b) une information en fonction des signaux rouge, vert et bleu délivrés par ledit moyen de prise d'images en fonction de l'amplitude de la composante de scintillement détectée.

7. Caméra électronique à images fixes selon la revendication 4, 5 ou 6, caractérisée en ce que ledit moyen de commande comporte un moyen pour commander la seconde exposition en fonction des premiers signaux de prise d'images en couleur.

8. Caméra électronique à images fixes selon l'une quelconque des revendications 4 à 7, caractérisée en ce que ledit moyen de commande commande une condition de temps d'exposition photographique.

9. Procédé photographique comprenant les étapes suivantes:
   a) formation de trois signaux de couleurs primaires à partir de la lumière reçue en provenance de l'objet au moyen d'un moyen de prise d'images,
   b) réalisation d'un contrôle du scintillement par un circuit de détection de scintillement, caractérisé par la
   c) formation, en fonction du scintillement tel que détecté par ledit circuit de détection de scintillement, de signaux de commande de l'équilibre du blanc, en fonction d'au moins l'un des signaux suivants
      i) les trois signaux primaires et
      ii) deux des trois signaux de couleurs primaires, et
   d) utilisation desdits signaux d'équilibre du blanc pour commander l'équilibre du blanc des signaux de couleur.

10. Procédé photographique selon la revendication 8, caractérisé par
   la formation d'information d'équilibre du blanc représentée par lesdits signaux de commande d'équilibre du blanc en réponse à des moyens de déclenchement;
   la remise à zéro du moyen de prise d'images à la suite de l'étape de formation;
   l'exposition du moyen de prise d'images après l'étape de remise à zéro;
   la lecture de signaux à partir du moyen de prise d'images après l'étape d'exposition; et
   la commande de l'équilibre du blanc des signaux obtenus au cours de l'étape de lecture sur la base de l'information d'équilibre du blanc obtenue au cours de l'étape de formation.

11. Procédé photographique selon la revendication 10, caractérisé en ce que l'information de photométrie est aussi formée au cours de l'étape de formation.

12. Procédé photographique selon la revendication 11, caractérisé par une étape de commande de l'étape d'exposition sur la base de l'information de photométrie formée.

FIG. 1
PRIOR ART

# FIG. 2(a)

FIG. 2(a)

# FIG. 2(b)

a : PG

b : SHUTTER — PRE EXPOSURE — MAIN EXPOSURE

c : IMAGE PICKUP ELEMENT OPERATING MODE — CLEAR · PRE READ OUT · CLEAR · READ OUT

d : OUTPUT $R-Y_L$ ($B-Y_L$)

e : OUTPUT $Y_L$

f : /RESET

g : OUTPUT $\int(R-Y_L)$ ($\int(B-Y_L)$) — Vref, $\Delta R-Y_L$, $\int R-Y_L$

h : OUTPUT $\int Y_L$ — Vref, $\int Y_L$, $\Delta Y_L$

i : WB DATA SAMPLING PULSE

j : /REC GATE

$t_0$ $t_1$ $t_2$ $t_3$ $t_4$ $t_5$ $t_6$ $t_7$ $t_8$ $t_9$ $t_{10}$ $t_{11}$ $t_{12}$ $t_{13}$ $t_{14}$ $t_{15}$ $t_{16}$ $t_{17}$

# FIG. 3

SW1 ON — 101

START SERVO — 102

START PHOTOMETRY — 103

SW2 ON ? — 104 → NO

YES

RHOTOMETRY ENDED ? — 105 → NO

YES

OUTPUT WB CONTROL VOLTAGE (FIXED VALUE) — 106

CLEAR IMAGE PICKUP ELEMENT — 107

PRE EXPOSURE — 108

READ INITIAL VALUES OF INTEGRATED OUTPUTS — 109

READ IMAGE PICKUP ELEMENT — 110

READ INTEGRATED OUTPUTS — 111

CALCULATE WB DATA — 112

OUTPUT WB CONTROL VOLTAGE OUTPUTS — 113

CLEAR IMAGE PICKUP ELEMENT — 114

MAIN EXPOSURE — 115

PG TIMING ? — 116 → NO

YES

READ IMAGE PICKUP ELEMENT AND RECORD IMAGE SIGNAL — 117

END

FIG. 4

EP 0 420 621 B1

# FIG. 5

FIG. 6

111

112-1
EVF < N ?    YES

NO    112-2

YES    EVF > M ?

112-3
CALCULATE R/G, B/G
FROM $Y_L, R-Y_L, B-Y_L$

NO    112-5
CALCULATE R/B, R/G, B/G
FROM $Y_L, R-Y_L, B-Y_L$

112-9
CALCULATE R/B
FROM $Y_L, R-Y_L, B-Y_L$

112-4
OBTAIN CONTROL VALUES
RWB, BWB FROM R/G, B/G

112-6
OBTAIN CONTROL VALUES
RWB1, BWB1 FROM R/B

112-7
OBTAIN RWB2, BWB2
FROM R/G, B/G

112-10
OBTAIN CONTROL VALUES
RWB, BWB FROM R/B

112-8
INTERPOLATE BETWEEN
RWB1 AND RWB2 AND BETWEEN
BWB1 AND BWB2 ACCORDING TO
MAGNITUDE OF FLICKER TO
OBTAIN CONTROL VALUES
RWB, BWB

113

EP 0 420 621 B1

# FIG. 7